# EUROPÄISCHE PATENTSCHRIFT

(11) **EP 0 621 123 B1**
(45) Veröffentlichungstag und Bekanntmachung des Hinweises auf die Patenterteilung: **03.03.1999**
(21) Anmeldenummer: 94104653.4
(22) Anmeldetag: 24.03.1994
(51) Int. Cl.: B29C 44/00

(54) **Fussbodenheizungssystem**
Underfloor heating system
Système de chauffage sous sol

(30) Priorität: 20.04.1993 DE 4312806
(43) Veröffentlichungstag der Anmeldung: 26.10.1994
(73) Patentinhaber: Roth Werke GmbH, 35232 Dautphetal-Buchenau (DE)
(72) Erfinder: Volkswirt, Manfred Roth, D-35232 Dauphetal (DE)
(74) Vertreter: Honke, Manfred, Dr.-Ing.

(56) Entgegenhaltungen:
- EP-A- 0 177 621
- DE-A- 4 116 620
- GB-A- 2 233 926

## Beschreibung

Die Erfindung betrifft ein auf einer Trenndecke angeordnetes Fußbodenheizungssystem. Das Fußbodenheizungssystem besteht aus nebeneinander verlegten Dämmplatteneinheiten, auf den Dämmplatteneinheiten verlegten Heizrohren, die zumeist aus Kunststoff bestehen, und U-Haltern, die ebenfalls zumeist aus Kunststoff bestehen, für das Befestigen der Heizrohre auf den Dämmplatteneinheiten, wozu die U-Halter, die Heizrohre überfassend, mit ihren Schenkeln in die Dämmplatteneinheiten eingetrieben werden. Das Fußbodenheizungssystem ist auf der Trenndecke angeordnet, wobei die U-Halter mit ihrem Steg die Heizrohre überfassen und mit ihren Schenkeln in die Dämmauflage eingestoßen sowie in der Dämmauflage min Widerhakenelementen verankert sind. Auf die Dämmauflage mit den verlegten Heizrohren wird ein schwimmender Estrich aufgebracht. Die Dämmauflage hat bei einem Fußbodenheizungssystem des beschriebenen Aufbaus in dämmtechnischer Hinsicht eine doppelte Funktion, nämlich die einer Wärmedämmung zur Trenndecke hin und die einer Schalldämmung, insbes. einer Trittschalldammung. Im übrigen müssen die Schenkel der U-förmigen Halter in den Dämmplatteneinheiten sicher festgehalten werden. Der Ausdruck "System" steht im Rahmen der Erfindung für einen Aufbau mit in physikalischer Hinsicht mehrfachem Ordnungsprinzip. Im Rahmen der Erfindung kann mit den verschiedensten Kunststoffen gearbeitet werden. Vorzugsweise wird mit Schaumstoffen aus Polystyrol gearbeitet, die auch unter dem Warenzeichen Styropor bekannt sind (vgl. Römpp "Chemie Lexikon", Band 5, 1992, Seite 4357).

Bei den bekannten Fußbodenheizungssystemen bestehen die Dämmplatteneinheiten aus Schaumkunststoff, nämlich zumeist aus geschäumtem Polystyrol. Das Polystyrol wird zu einem Block in einer entsprechenden Form aufgeschäumt oder als Strang extrudiert und die Dämmplatteneinheiten werden von dem erhärteten Block bzw. Strang abgetrennt. Die Dämmplatteneinheiten besitzen über ihre Länge, Breite und Dicke die gleiche Dichte. Sollen die aus DIN 4109 resultierenden Anforderungen an die Dämmung sicher erfüllt werden, so reicht die Festigkeit der Dämmplatteneinheiten zumeist nicht aus, um die Schenkel der U-Halter und damit die Heizrohre bei der Montage eines solchen Fußbodenheizungssystems sicher festzuhalten. In der Praxis ist es daher üblich, die Dämmplatteneinheiten so einzurichten, daß die Anforderungen aus DIN 4109 bezüglich der Dämmung eingehalten werden. Zur Verbesserung der Halterung der die Heizrohre überfassenden U-Halter ist es bekannt, auf die Dämmplatteneinheiten Folienschichten aufzubringen. Das ist arbeitsaufwendig. Die Folienschichten sind im übrigen erforderlich, um die Trittfestigkeit, die jedenfalls während der Montage von solchen Fußbodenheizungssystemen erforderlich ist, weil sie begangen werden, sicherzustellen. An den Schenkeln der U-Halter angebrachte Widerhaken unterfassen dabei die Folie. Wo die handelsüblichen Dämmplatten aus Schaumkunststoff eine zu geringe Dicke aufweisen, um in bezug auf die Dämmung allen Anforderungen zu genügen, ist es im Rahmen der bekannten Maßnahmen bekannt, mehrere Dämmplatten aus Schaumkunststoff aufeinanderzulegen. So entstehen in dämmtechnischer Hinsicht und insbes. in schalldämmtechnischer Hinsicht mehrschalige, zumeist zweischalige Systeme, die häufig nicht reproduzierbare Dämmwerte aufweisen.

Aus EP-A-0 177 621 ist ein Verfahren zur Herstellung einer Platte durch aufschäumen von Schaumstoffmaterialien bekannt. Die nach dem bekannten Verfahren hergestellte Platte kann unter anderem auch als Trittschalldämmplatte eingesetzt werden, welche Trittschalldämmplatte auch Leitungen von Fußbodenheizungen aufnehmen kann. Dazu werden die Leitungen in rasterartig angeordnete Ausnehmungen einer oberen Dämmplatte eingelegt.

Der Erfindung liegt das technische Problem zugrunde, ein Fußbodenheizungssystem anzugeben, das bezüglich der Trittfestigkeit, der Wärmedämmung und der Schalldämmung allen Anforderungen genügt und zusätzlich die Schenkel von U-Haltern und damit die Heizrohre bei der Montage der Fußbodenheizungssysteme sicher festhält.

Zur Lösung dieses technischen Problems lehrt die Erfindung ein auf einer Trenndecke angeordnetes Fußbodenheizungssystem, bei dem die folgenden Merkmale verwirklicht sind:

Die Dämmauflage besteht aus Dämmplatten mit zwei schaumschlüssig verbundenen Dämmplattenschichten aus Schaumkunststoff,
die obere Dämmplattenschicht besitzt eine Dicke von 10 bis 20 mm und ein Raumgewicht von 25 bis 35 kg/m³,
die untere Dämmplattenschicht besitzt eine Dicke von 30 bis 45 mm und weist eine gegenüber der oberen Dämmplattenschicht um einen Faktor von 0,67 bis 0,33 geringere Dichte auf,
auf der oberen Dämmplattenschicht liegen Heizrohre aus Kunststoff, die von U-förmigen Haltern mit in die Dämmauflage eingestoßenen Schenkeln überfast sind,
die Schenkel der U-förmigen Halter besitzen an der Schenkelspitze elastisch verformbare Widerhakenelemente und außerdem elastisch verformbare Widerhakenelemente, welche die obere Dämmplattenschicht unterfassen.

Zur Herstellung von Dämmplatteneinheiten aus Schaumkunststoff für das erfindungsgemäße Fußbodenheizungssystem wird zumindest ein aufschäumungsfähiges Ausgangspolymerisat im plastischen Zustand in eine Form eingebracht und in einem ersten Aufschäumverfahrensschritt zu einer ersten Dammplattenschicht aufgeschäumt sowie in einem zweiten Aufschäumverfahrensschritt zu einer zweiten Dammplattenschicht aufgeschäumt, wobei die beiden Dämmplattenschichten schaumschlüssig verbunden werden und wobei das Aufschäumen so eingerichtet wird, daß die im eingebauten Zustand des Fußbodenheizungssystems obere Dämmplattenschicht eine für die Trittfestigkeit der Dämmplatteneinheiten eingerichtete Dichte und die im eingebauten Zustand des Fußbodenheizungssystems untere Dämmplattenschicht eine demgegenüber um einen Faktor von 0,67 bis 0,33, vorzugsweise um einen Faktor von etwa 0,4, geringere Dichte aufweist, und wobei die obere Schicht der schaumschlüssig verbundenen Dämmplattenschichten außerdem durch ihre Schichtdicke trittfest ausgebildet wird sowie die Dämmplatteneinheiten durch ihre Plattendicke so eingerichtet werden, daß sie im eingebauten Zustand den Anforderungen von DIN 4109 genügen. Eine nachträgliche Verdichtung der oberen Schicht der schaumflüssig verbundenen Dämmschichten findet erfindungsgemäß regelmäßig nicht statt. In besonderen Fällen kann eine solche nachträgliche Verdichtung jedoch durchgeführt werden. Zur Herstellung von Platten und insbes. Dämmplatten aus Schaumkunststoff sind die verschiedensten Technologien bekannt. Zu diesem Stand der Technik ist folgendes vorzutragen:

Der Ausdruck "Schaumkunststoffe" bezeichnet Kunststoffprodukte mit poröser, fellartiger Struktur, die sich von den kompakten Kunststoffen vor allem durch geringere Dichte, fernerhin durch reduzierte Wärmeleitfähigkeit und verbesserte Schallabsorption auszeichnen. Sie sind leicht zu verarbeiten und zu montieren. Häufig besitzen sie auch eine hohe Elastizität. Nach der strukturellen Ausbildung der Schaumzellen in den Schaumkunststoffen unterscheidet man geschlossene Schaumkunststoffe, bei denen die Gasbläschen vollständig vom Kunststoff umhüllt sind, und offenzellige Schaumkunststoffe, bei denen die Zellen untereinander kommunizieren. Es gibt auch Mischerscheinungen. Die mechanischen Eigenschaften sowie das Wärmeisolationsvermögen sind bei den geschlossenzelligen Schaumkunststoffen besser als bei den offenzelligen, andererseits besitzen die offenzelligen Schaumkunststoffe ein besseres Schallschluckvermögen.

Schaumkunststoffe in Form von Dämmplatten und Dämmplatteneinheiten werden im Baugewerbe umfangreich eingesetzt. Schaumkunststoffe lassen sich praktisch aus allen Kunststoffen herstellen. Im Rahmen der Erfindung werden die Ausgangsstoffe als Ausgangspolymerisate bezeichnet. Polymerisate meint im Rahmen der Erfindung insbes. Polyäthylen, Polystyrol und unter Umständen auch Polyvinylchlorid. Wie bereits erwähnt, wird vorzugsweise mit geschäumtem Polystyrol gearbeitet. Die Polymerisate werden im plastischen Zustand durch Einpressen und anschließendes Entspannen von inerten Gasen wie Stickstoff, Kohlendioxid oder Methylchlorid bzw. durch Zugabe von thermisch instabilen festen Substanzen, die zu gasförmigen Substanzen zerfallen (z. B. Säureazide) aufgeschäumt. Daneben können auch noch im Polymerisat enthaltene Monomere oder vor allem leicht flüchtige Lösungsmittel beim Erwärmen des Kunststoffes als Treibmittel funktionieren. Zur Herstellung des erfindungsgemäßen Fußbodenheizungssystems kann mit allen bekannten Maßnahmen und den dazu entwickelten Apparaten und Vorrichtungen gearbeitet werden. Das gilt auch in bezug auf die Ausgangskunststoffe, wenn auch vorzugsweise mit geschäumtem Polystyrol gearbeitet wird.

Die Dämmplatteneinheiten des erfindungsgemäßen Fußbodenheizungssystems genügen allen Anforderungen, und zwar überraschenderweise deshalb, weil bei den fertigen Dämmplatteneinheiten die untere Dämmplattenschicht eine gegenüber der oberen Dämmplattenschicht um einen Faktor von 0,67 bis 0,33, vorzugsweise um einen Faktor von etwa 0,4, geringere Dichte aufweist, wobei die obere Schicht der schaumschlüssig verbundenen Dämmplattenschichten außerdem durch ihre Schichtdicke trittfest ausgebildet wird sowie die Dämmplatteneinheiten durch ihre Plattendicke so eingerichtet werden können, daß sie den Anforderungen von DIN 4109 genügen. Die entsprechende Optimierung kann im Laborversuch ohne weiteres durchgeführt werden. Überraschenderweise werden auch die Schenkel der U-Halter sicher festgehalten, wenn diese so ausgebildet und angeordnet werden, wie es weiter unten beschrieben wird. Die auf einfache Weise hergestellten Dämmplatteneinheiten können auch einfach montiert werden, weil es nicht mehr erforderlich ist, mehrere Dämmplatten übereinander anzuordnen, sondern vielmehr eine monolithische Einheit verlegt werden kann.

Bevorzugt kann bei der Herstellung des erfindungsgemäßen Fußbodenheizungssystems so vorgegangen werden, daß zunächst ein erstes aufschäumungsfähiges Ausgangspolymerisat im plastischen Zustand als erste Schicht in die Form eingebracht und aufgeschäumt wird, wobei danach (vorzugsweise unmittelbar danach oder noch während des Aufschäumens der ersten Schicht) ein zweites aufschäumungsfähiges Ausgangspolymerisat im plastischen Zustand als zweite Schicht in der Form auf die aufgeschäumte erste Schicht aufgebracht und ihrerseits aufgeschäumt sowie dabei und dadurch mit der ersten Schicht schaumschlüssig verbunden wird. Darüberhinaus kann man auf die zweite oder obere Schicht eine abdeckende Folie, z. B. eine Kunststoffolie, aufbringen, insbes. kleberfrei mit dem aufgeschäumten Kunststoff der oberen Schicht stoffschlüssig verbinden.

Der Ausdruck "schaumschlüssiger Verbund" ist an den Ausdruck "stoffschlüssiger Verbund" angeschlossen. Von einem stoffschlüssigen Verbund wird im Rahmen der Kunststofftechnik und bei Metallen dann gesprochen, wenn ein Verschweißen erfolgt. Schaumschlüssiger Verbund bezeichnet die Tatsache, daß die einzelnen Bläschen, die den Schaumkunststoff als offene oder geschlossene Poren bilden, auch miteinander verhakt sind. Insoweit stellt der Übergang zwischen der einen oder anderen Schicht in mechanischer Hinsicht keine störende Singularität dar. Überraschenderweise ist ein solcher schaumschlüssiger Verbund möglich, wenn erfindungsgemäß gearbeitet wird. Wird so gearbeitet, wie es vorstehend beschrieben wurde, so kann ohne weiteres mit mit unterschiedlicher Dichte aufschäumbaren Ausgangspolymerisaten gearbeitet werden.

Eine andere Möglichkeit der Herstellung des erfindungsgemäßen Fußbodenheizungssystems sieht vor, daß ein aufschäumungsfähiges Ausgangspolymerisat in einer Masse, die für die Herstellung der gesamten Dämmplatteneinheit ausreicht, in die Form eingebracht wird und diese Masse zuerst mit gebremster Aufschäumung zur Erzeugung der Schicht großer Dichte und danach mit befreiter Aufschäumung zur Erzeugung der Schicht mit geringer Dichte in die Form eingebracht wird. Die Bremsung der Aufschäumung bzw. die Freigabe der Aufschäumung kann auf bekannte Art und Weise erfolgen, je nach den Maßnahmen, die zur Verwirklichung der Aufschäumung eingesetzt werden. Beispielsweise kann das Bremsen bzw. die Freigabe der Aufschäumung über entsprechende Temperaturbeeinflussung erfolgen. Es besteht aber auch die Möglichkeit, bei chemischer Aufschäumung, z. B. über Verzögerer, die Verhältnisse wie beschrieben einzustellen. Auch mechanische Mittel können die Bremsung bzw. die Freigabe der Schäumung bewirken.

Nach bevorzugter Ausführungsform weist die untere Schicht der Dämmplatteneinheiten, die im montierten Zustand der Trenndecke zugewandt angeordnet ist, ein Raumgewicht von 10 bis 15 kg/m³, vorzugsweise von etwa 12 kg/m³ auf. Die obere Schicht weist ein Raumgewicht von 25 bis 35 kg/m³, vorzugsweise von etwa 30 kg/m³, auf. Die untere Schicht wird mit einer Dicke von 30 bis 45 mm, vorzugsweise von etwa 38 mm, hergestellt. Die obere Schicht wird demgegenüber mit einer Dicke von 10 bis 20 mm, vorzugsweise von etwa 15 mm, hergestellt. Unten und oben bezieht sich hier auf den eingebauten Zustand der Dämmplatteneinheiten bei der Herstellung eines Fußbodenheizungssystems. Ohne weiteres können die Ausgangspolymerisate und das Aufschäumen so eingestellt werden, daß die fertigen Dämmplatteneinheiten eine dynamische Steifigkeit nach DIN 18164 im Bereich von 10 bis 30 mn/m³ aufweisen.

Die Oberfläche der im eingebauten Zustand des Fußbodenheizungssystems oberen Dämmplattenschicht kann nach dem Aufschäumen verdichtet werden. Das kann unmittelbar nach dem Aufschäumen noch in der Form und vor der Aushärtung erfolgen, das ist aber mit entsprechender Temperatur auch nach der Aushärtung möglich, und zwar insbes. dann, wenn mit geschäumtem Polystyrol gearbeitet wird. Die Oberfläche der im eingebauten Zustand des Fußbodenheizungssystems oberen Dämmplattenschicht kann insbesondere durch Bedampfung verdichtet werden.

Im folgenden wird die Erfindung anhand einer lediglich ein Ausführungsbeispiel darstellenden Zeichnung ausführlicher erläutert.

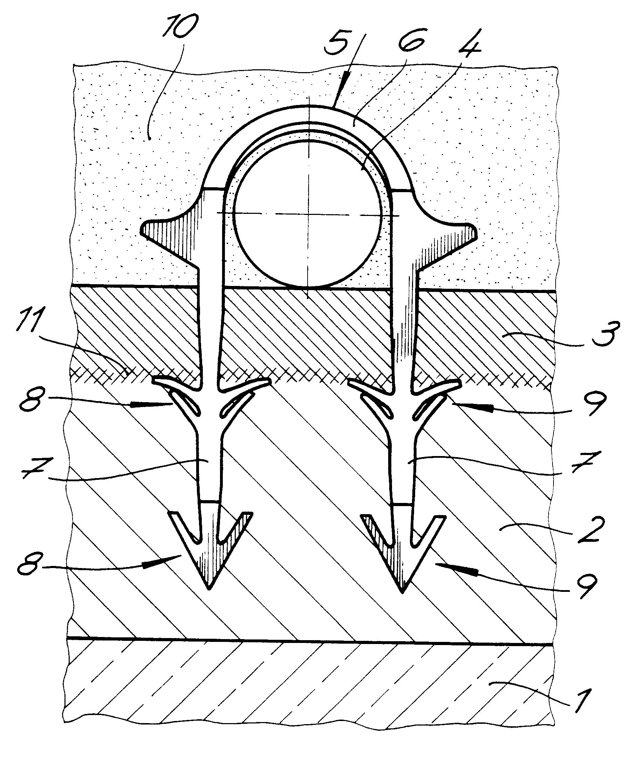

Die einzige Figur zeigt einen Schnitt durch ein erfindungsgemäßes Fußbodenheizungssystem.

Das in der Figur dargestellte Fußbodenheizungssystem ist auf einer nur angedeuteten Trenndecke 1 angeordnet. Zum grundsätzlichen Aufbau gehören eine Dämmauflage 2, 3 aus Dämmplatten, auf der Dämmauflage 2, 3 verlegte Heizrohre aus Kunststoff und U-Halter aus Kunststoff für die Heizrohre 4. Die Dämmplatten bestehen aus zwei schaumschlüssig verbundenen Schichten 2, 3 aus Schaumkunststoff, z. B. Polystyrol. Das Fußbodenheizungssystem ist auf die Trenndecke 1 aufgelegt. Die U-Halter 5 überfassen mit ihrem Steg 6 die Heizrohre 4. Sie sind mit ihren Schenkeln 7 in die Dämmauflage 2, 3 eingestoßen und in der Dämmauflage 2, 3 mit Widerhakenelementen 8, 9 verankert. Auf die Dämmauflage 2, 3 mit den verlegten Heizrohren 4 ist ein schwimmender Estrich 10 aufgebracht, der in der Zeichnung ebenfalls angedeutet wurde.

Die Dämmauflage 2, 3 besteht aus einer unteren Schicht 2 und einer oberen Schicht 3. Das wurde in der einzigen Figur durch unterschiedliche Schraffur angedeutet. Die Schichten 2, 3 gehören wegen des stoffschlüssigen und schaumschlüssigen Verbundes einschaligen Dämmplatteneinheiten an. Der Verbund der Schichten 2, 3 ist durch die Kreuzschraffur 11 angedeutet. Der Verbund ist frei von systemfreien Elementen. Die untere Schicht 2 mit der Schraffur aus weit beabstandeten Strichen besitzt ein Raumgewicht von 10 bis 15 kg/m³. Vorzugsweise liegt das Raumgewicht im Bereich von etwa 12 kg/m³. Die obere Schicht 3 besitzt ein höheres Raumgewicht und zur Andeutung des höheren Raumgewichtes eine Schraffur mit dichter angeordneten Schraffurlinien. Das Raumgewicht mag im Bereich von 25 bis 35 kg/m³, vorzugsweise von etwa 30 kg/m³ liegen. Die beiden Schichten 2, 3 bilden, wie gewohnt, jeweils eine einschalige Dämmplatteneinheit. Die Schenkel 7 der U-Halter 5 besitzen in Einstoßrichtung V-förmig angeordnete, zum zugeordneten Schenkel 7 hin elastisch verformbare und unter dem Einfluß von an den U-Haltern 5 angreifenden Zugkräften aufspreizbare Widerhakenelemente 8, 9. Die Widerhakenelemente 8, 9 befinden sich im eingestoßenen Zustand in der unteren Schicht 2 der Dämmplatteneinheiten. Bei diesem grundsätzlichen Aufbau ist erfindungsgemäß eine besondere Abstimmung verwirklicht, die zeichnerisch nicht darstellbar ist und darin besteht, daß die obere Schicht 2 der Dämmplatteneinheiten durch ihre Schichtdicke trittfest ausgebildet ist, und daß die Dämmplattenauflage ihrerseits durch ihre Plattendicke insgesamt den Anforderungen von DIN 4109 genügt.

Die beiden Schichten 2, 3 der Dämmplatteneinheiten sind einstückig gefertigt. Die untere Schicht 2 mag eine Dicke im Bereich von 30 bis 45 mm aufweisen. Sie liegt im Ausführungsbeispiel bei etwa 38 mm. Die obere Schicht 3 besitzt eine Dicke im Bereich von 10 bis 20 mm und besitzt im Ausführungsbeispiel eine Dicke von 15 mm.

Im Ausführungsbeispiel sind die Widerhakenelemente 8, 9 an den einzelnen Schenkeln 7 der U-Haken einerseits, an den Spitzen der Schenkel andererseits und außerdem, im eingestoßenen Zustand betrachtet, im oberen Bereich der unteren Schicht 2 der Dämmplatteneinheiten, die obere Schicht 3 unterfassend, angeordnet. Sie sind im oberen Bereich der unteren Schicht 2 jeweils doppelt vorgesehen. Dabei stützen sich die beiden Widerhakenelemente 8, 9 auch gegeneinander ab.

## Patentansprüche

1. Auf einer Trenndecke angeordnetes Fußbodenheizungssystem, bei dem die folgenden Merkmale verwirklicht sind:
1.1) die Dämmauflage besteht aus Dämmplatten mit zwei schaumschlüssig verbundenen Dämmplattenschichten aus Schaumkunststoff,
1.2) die obere Dämmplattenschicht besitzt eine Dicke von 10 bis 20 mm und ein Raumgewicht von 25 bis 35 kg/m³,
1.3) die untere Dämmplattenschicht besitzt eine Dicke von 30 bis 45 mm und weist eine gegenüber der oberen Dämmplattenschicht um einen Faktor von 0,67 bis 0,33, geringere Dichte auf,
1.4) auf der oberen Dämmplattenschicht liegen Heizrohre aus Kunststoff, die von U-förmigen Haltern mit in die Dämmauflage eingestoßenen Schenkeln überfaßt sind,
1.5) die Schenkel der U-förmigen Halter besitzen an der Schenkelspitze elastisch verformbare Widerhakenelemente und außerdem elastisch verformbare Widerhakenelemente, welche die obere Dämmplattenschicht unterfassen.

2. Fußbodenheizungssystem nach Anspruch 1, wobei die untere Dämmplattenschicht ein Raumgewicht von 10 bis 15 kg/m³, vorzugsweise etwa 12 kg/m³, aufweist.

3. Fußbodenheizungssystem nach einem der Ansprüche 1 oder 2, wobei eine Dämmplatte eine dynamische Steifigkeit nach DIN 18164 im Bereich von 10 bis 30 mn/m³ aufweist.

## Claims

1. A floor heating system disposed on an intermediate floor and embodying the following features:
1.1) the insulation overlay consists of insulating panels with two insulating panel layers of foam plastic, the said layers being integrally connected by way of the foam,
1.2) the top insulating panel layer has a thickness of 10 to 20 mm and a volumetric weight of 25 to 35 kg/m³,
1.3) the bottom insulating panel layer has a thickness of 30 to 45 mm and has a density which is lower by a factor of 0.67 to 0.33 than the upper insulating panel layer,
1.4) plastic heating pipes lie on the upper insulating panel layer and over them engage U-shaped holders with limbs which are pushed into the insulation overlay,
1.5) the limbs of the U-shaped holders have elastically deformable barb elements at the limb tips and also elastically deformable barb elements which engage beneath the upper insulating panel layer.

2. A floor heating system according to claim 1, wherein the lower insulating panel layer has a volumetric weight of 10 to 15 kg/m³, preferably about 12 kg/m³.

3. A floor heating system according to claim 1 or 2, wherein an insulating panel has a dynamic stiffness to DIN 18164 in the range from 10 to 30 mn/m³.

## Revendications

1. Système de chauffage par le sol disposé sur une dalle de séparation, présentant les caractéristiques suivantes:
1.1 la couche-support isolante se compose de panncaux isolants avec deux couches de panneau isolant en matière plastique expansée liées par expansion,
1.2 la couche de panneau isolant supérieure a une épaisseur comprise dans une plage allant de 10 à 20 mm et un poids spécifique compris dans une plage allant de 25 à 35 kg/m³,
1.3 la couche de panneau isolant inférieure a une épaisseur comprise dans une plage allant de 30 a 45 mm et, par rapport à la couche de panneau isolant supérieure, présente une densité plus faible d'un facteur de 0,67 à 0,33,
1.4 sur la couche de panneau isolant supérieure sont disposés des tubes de chauffage en matière plastique qui sont tenus par des fixations en forme de U, dont les ailes sont enfoncées dans la couche-support isolante,
1.5 les ailes des fixations en forme de U portent au niveau de leur extrémité des éléments formant crochets élastiquement déformables et en outre des éléments formant crochets élastiquement déformables qui s'accrochent sous la couche de panneau isolant supérieure.

2. Système de chauffage par le sol selon la revendication 1, dans lequel la couche de panneau isolant inférieure présente un poids spécifique compris dans une plage allant de 10 à 15 kg/m³, de préférence d'environ 12 kg/m³.

3. Système de chauffage par le sol selon une des revendications 1 ou 2, dans lequel un panneau isolant présente une rigidité dynamique selon norme DIN 18164 comprise dans une plage allant de 10 à 30 mn/m³.
